# EUROPEAN PATENT APPLICATION

(11) **EP 1 764 953 A1**
(43) Date of publication of application: **21.03.2007**
(21) Application number: 05750804.6
(22) Date of filing: 03.06.2005
(51) Int. Cl.: H04L 12/28, H04L 9/08

(54) **COMMUNICATION SYSTEM, KEY DISTRIBUTION CONTROL DEVICE, AND RADIO LAN BASE STATION DEVICE**

(30) Priority: 08.07.2004 JP 2004201944
(71) Applicant: MATSUSHITA ELECTRIC INDUSTRIAL CO., LTD., Osaka 571-8501 (JP)
(72) Inventor: IINO, Satoshi, 1-3-7 Shiromi, Chuo-ku, Osaka 540-6319 (JP); MATSUI, Hironori, 1-3-7 Shiromi, Chuo-ku, Osaka 540-6319 (JP)
(74) Representative: Grünecker, Kinkeldey, Stockmair & Schwanhäusser Anwaltssozietät
(86) International application number: PCT/JP2005/010261
(87) International publication number: WO 2006/006321

(57) **Abstract**

There are provided a communication system, a key distribution control device, and Wireless LAN base station device capable of more synchronizing the key configuration time of the Wireless LAN base station device with that of a communication terminal device, thereby reducing the communication cut-off period generated between the Wireless LAN base station device and the communication terminal device. In this communication system, an AP control device (100) can concatenate (encapsulate) an EAPoL-Key frame as first key information used by the communication terminal device (300) and second key information used by the Wireless LAN base station device (200) so as to generate a single frame (a key configuration request frame) and transmit the frame to the Wireless LAN base station device (200) . The Wireless LAN base station device (200) separates the received frame into the EAPoL-Key frame as the first key information and the second key information used by the Wireless LAN base station device (200). The EAPoL-Key frame is transmitted to the communication terminal device (300) .

## Description

### Technical Field

The present invention relates to a communication system, key distribution control apparatus, and Wireless LAN base station apparatus, and more particularly to a communication system relating to Wireless LAN, and a key distribution control apparatus and Wireless LAN base station apparatus that are components thereof.

### Background Art

In recent years, the diffusion of Wireless LAN (IEEE802.11 standard) has progressed, and large-scale Wireless LAN network systems have been constructed in public networks and corporate networks. Along with this, investigation has been undertaken into shifting from a method whereby an access point (AP) - for example, Wireless LAN base station apparatus - is set and installed individually, to a method whereby an Access controller that connects a plurality of Wireless LAN base station apparatus performs Wireless LAN base station apparatus automatic configuration, fault management, statistical information collection, and so forth, en bloc. This investigation has been carried out by IETF (Internet Engineering Task Force) and IEEE802.11 Working Group, and progress is being made in drawing up standards.

Thus, investigation has been carried out into an architecture in which bridge processing between Wireless LAN frame (IEEE802.11 standard) and Ethernet (registered trademark) frame is not performed by Wireless LAN base station apparatus, but is performed by a AP control apparatus, and an authentication port opening/closing location is also moved from Wireless LAN base station apparatus to the AP control apparatus. In such an architecture, LWAPP (light weight access point protocol) has been proposed by the IETF CAPWAP Working Group as a protocol for managing APs. With this LWAPP, the AP control apparatus performs automatic configuration of configuration information, fault management, statistical information collection, encryption key information configuration, and so forth, for Wireless LAN base station apparatus.

In the communication system proposed here (see Non-patent Document 1), an AP control apparatus reports an encryption key to a communication terminal by means of an EAPoL-Key frame when key configuration is performed. At this time, an Add Mobile Request frame is sent to an access point at the same timing. Thus, an encryption key necessary for communication between a communication terminal and Wireless LAN base station apparatus is distributed to the communication terminal and Wireless LAN base station apparatus by the AP control apparatus. An encryption key sent to a communication terminal from the AP control apparatus is delivered via the Wireless LAN base station apparatus.
Non-patent Document 1: IETF draft draft-ohara-capwap-lwapp-00.txt "Light Weight Access Point Protocol"

### Disclosure of Invention

### Problems to be Solved by the Invention

However, in a conventional communication system, an AP control apparatus serving as a key distribution control apparatus sends different frames to Wireless LAN base station apparatus and a communication terminal when communication terminal authentication is successful. Therefore, in the event of congestion of the network system between the AP control apparatus and Wireless LAN base station apparatus, there is a great difference in the timings at which the frames sent by the AP control apparatus reach the Wireless LAN base station apparatus and the communication terminal, and as a result of this difference, a difference may arise between the encryption key configuration times in the communication terminal and the Wireless LAN base station apparatus.

If there is a difference between the encryption key configuration times, a state will arise in which the encryption key is set in only one or other of the communication terminal or the Wireless LAN base station apparatus, and in this state, communication cannot be carried out between the communication terminal and the Wireless LAN base station apparatus. For example, if the encryption key is first set only in the Wireless LAN base station apparatus, and encryption key configuration in the communication terminal is delayed, until encryption key configuration is performed in the communication terminal a frame sent from the Wireless LAN base station apparatus is encrypted, but the communication terminal receiving that frame cannot decrypt that encrypted frame.

It is an object of the present invention to provide a communication system, key distribution control apparatus, and Wireless LAN base station apparatus that enable the key configuration times of Wireless LAN base station apparatus and communication terminal to be synchronized to a greater degree, and a period of interruption of communication arising between Wireless LAN base station apparatus and communication terminal to be shortened.

### Means for Solving the Problems

A first feature of the present invention is that a communication system has a communication terminal, Wireless LAN base station apparatus that is accessed by the communication terminal, and a key distribution control apparatus that distributes encryption key information used in communication between the communication terminal and the Wireless LAN base station apparatus; the key distribution control apparatus is provided with a generation section that links first encryption key information used by the communication terminal and second encryption key information used by the Wireless LAN base station apparatus, and generates one key information frame; and the Wireless LAN base station apparatus is provided with a separation section that separates the key information frame into the first encryption key information and the second encryption key information, and a transmitting section that transmits the first encryption key information to the communication terminal.

A second feature of the present invention is that a key distribution control apparatus is provided with: a generation section that distributes encryption key information usedincommunication betweenacommunication terminal and Wireless LAN base station apparatus accessed by the communication terminal, links first encryption key information used by the communication terminal and second encryption key information used by the Wireless LAN base station apparatus, and generates one key information frame; and a transmitting section that transmits the key information frame to the Wireless LAN base station apparatus.

A third feature of the present invention is that Wireless LAN base station apparatus is provided with: a separation section that receives the key information frame from the above-described key distribution control apparatus, and separates the key information frame into the first encryption key information and the second encryption key information; and a transmitting section that transmits the first encryption key information to the communication terminal.

### Advantageous Effect of the Invention

According to the present invention, it ispossible to provide a communication system, key distribution control apparatus, and Wireless LAN base station apparatus that enable the key configuration times of Wireless LAN base station apparatus and communication terminal to be synchronized to a greater degree, and a period of interruption of communication arising between Wireless LAN base station apparatus and communication terminal to be shortened.

### Brief Description of Drawings

FIG.1 is a block diagram showing the configuration of a communication system according to one embodiment of the present invention;
FIG.2 is a block diagram showing the configuration of the AP control apparatus in FIG.1;
FIG.3 is a drawing showing an example of the configuration of a key management table;
FIG.4 is a drawing for explaining the configuration of a key configuration request frame;
FIG.5 is a block diagram showing the configuration of Wireless LAN base station apparatus in FIG. 1; and
FIG.6 is a sequence diagram showing the flow of operations of a communication system according to one embodiment.

### Best Mode for Carrying Out the Invention

An embodiment of the present invention will now be described in detail with reference to the accompanying drawings.

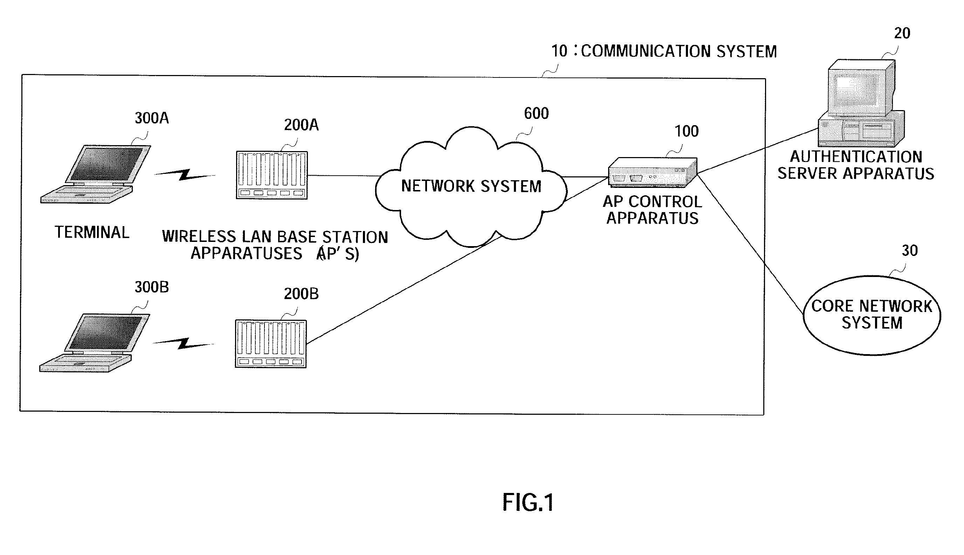

First, the configuration of a communication system according to this embodiment will be described with reference to FIG.1.

As shown in FIG. 1, a communication system 10 according to this embodiment includes communication terminals 300, Wireless LAN base station apparatus 200 that are accessed by communication terminals 300, an AP control apparatus 100 serving as a key distribution control apparatus that distributes encryption key information used in communication between communication terminals 300 and Wireless LAN base station apparatus 200, and a network system 600. AP control apparatus 100 is connected to an authentication server apparatus 20 and a core network system 30.

In this communication system 10, AP control apparatus 100 links first key information used by a communication terminal 300 and second key information used by Wireless LAN base station apparatus 200 and generates one frame, and transmits this frame to Wireless LANbase station apparatus 200. Wireless LANbase station apparatus 200 separates the frame sent from AP control apparatus 100 into first key information and second key information. Then Wireless LAN base station apparatus 200 transmits the first key information to communication terminal 300, and uses the second key information in communication with communication terminal 300.

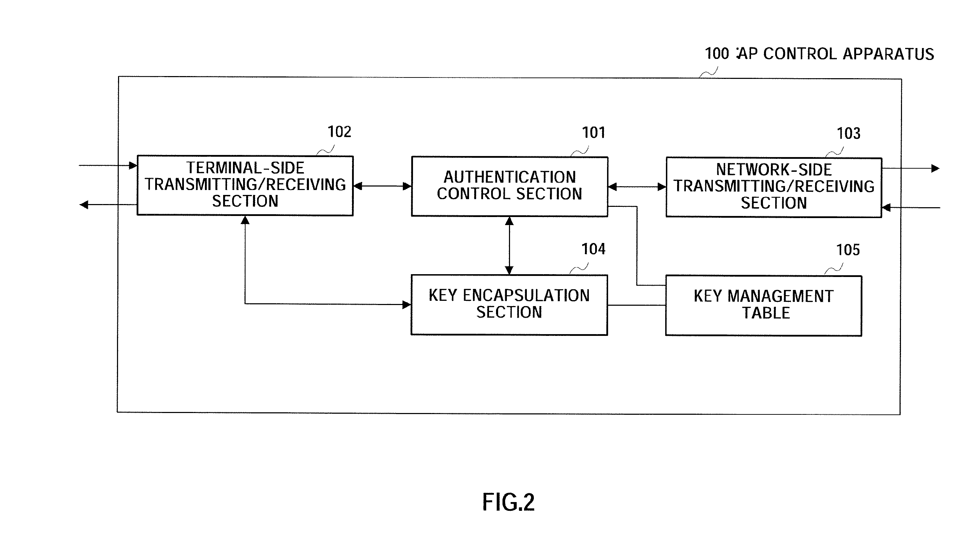

As shown in FIG.2, AP control apparatus 100 is equipped with an authentication control section 101, a terminal-side transmitting/receiving section 102, a network-side transmitting/receiving section 103, a key encapsulation section 104 serving as a generation section that links first key information used by a communication terminal 300 and second key information used by Wireless LAN base station apparatus 200 and generates one frame, and a key management table 105.

When authentication control section 101 receives an authentication request from a communication terminal 300viaterminal-sidetransmitting/receivingsection102, authentication control section 101 sends this authentication request to authentication server apparatus 20 via network-side transmitting/receiving section 103.

Also, authentication control section 101 receives Access-Accept from authentication server apparatus 20 via network-side transmitting/receiving section 103 as a successful result of authentication corresponding to an authentication request, and sends this Access-Accept to communication terminal 300 via terminal-side transmitting/receiving section 102 as EAP-Success.

Furthermore, authentication control section 101 sends an EAPoL-Key frame - which is first key information that should be reported to communication terminal 300 - to key encapsulation section 104.

Key encapsulation section 104 performs the following operations only upon receiving an EAPoL-Key frame from authentication control section 101. Specifically, key encapsulation section 104 extracts from key management table 105 a terminal MAC address corresponding to the above communication terminal 300 for which authentication has been successful, and second key information used by Wireless LAN base station apparatus 200, and creates a key element. In key management table 105, terminal MAC addresses corresponding to each of the communication terminals 300 are stored together with corresponding second key information used by Wireless LAN base station apparatus 200.

Key encapsulation section 104 also creates an EAPoL element from a received EAPoL-Key frame. Then key encapsulation section 104 creates a key configuration request frame from the created key element and EAPoL element.

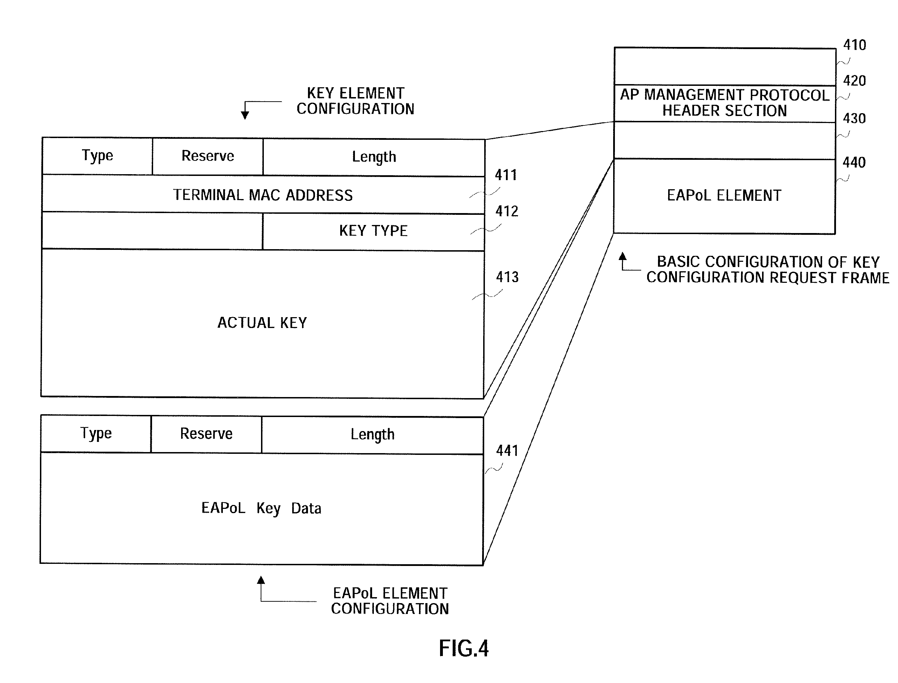

As shown in FIG.4, this key configuration request frame has a basic configuration made up of an Ether header section 410, an AP management protocol header section 420, a key element 430, and an EAPoL element 440. It is here assumed that AP control apparatus 100 and Wireless LAN base station apparatus 200 are connected by means of an Ethernet (registered trademark).

In a key configuration request frame, Ether header section 410 is outermost, with AP management protocol header section 420 inward of this. In the AP management protocol various messages are necessary, such as messages for AP configuration, collection of statistical information, and so forth, but in the present invention, only a key configuration request is stipulated. The fact that the frame is a key configuration request frame is indicated by AP management protocol header section 420.

Ether header section 410 contains a destination MAC address (here, the MAC address of Wireless LAN base station apparatus 200), a transmission source MAC address (here, the MAC address of AP control apparatus 100), and an Ether type - that is, a type indicating an AP control protocol.

A key configuration request frame has two elements - key element 430 and EAPoL element 440. Key element 430 contains a terminal MAC address 411 corresponding to communication terminal 300, a key type 412 (a type stipulating either a unicast key or a broadcast key), and actual second key information 413 used by Wireless LAN base station apparatus 200.

Also, EAPoL element 440 contains an EAPoL-Key frame - that is, the actual first key information used by communication terminal 300. This EAPoL-Key frame is adapted to the form of frames exchanged between communication terminal 300 and Wireless LAN base station apparatus 200 so that there is no need for frame conversion by Wireless LAN base station apparatus 200. For example, if communication terminal 300 and Wireless LAN base station apparatus 200 are connected by means of a wireless LAN, the frame form used by the wireless LAN - for example, an EAPoL-Key frame, which is the frame form (signal form) used in the data link layer - is stored in the key configuration request frame.

Thus, key encapsulation section 104 links (encapsulates) an EAPoL-Key frame as first key information used by communication terminal 300, and second key information used by Wireless LAN base station apparatus 200, and generates one frame (a key configuration request frame).

Then key encapsulation section 104 sends the generated key configuration request frame to Wireless LAN base station apparatus 200 via terminal-side transmitting/receiving section 102.

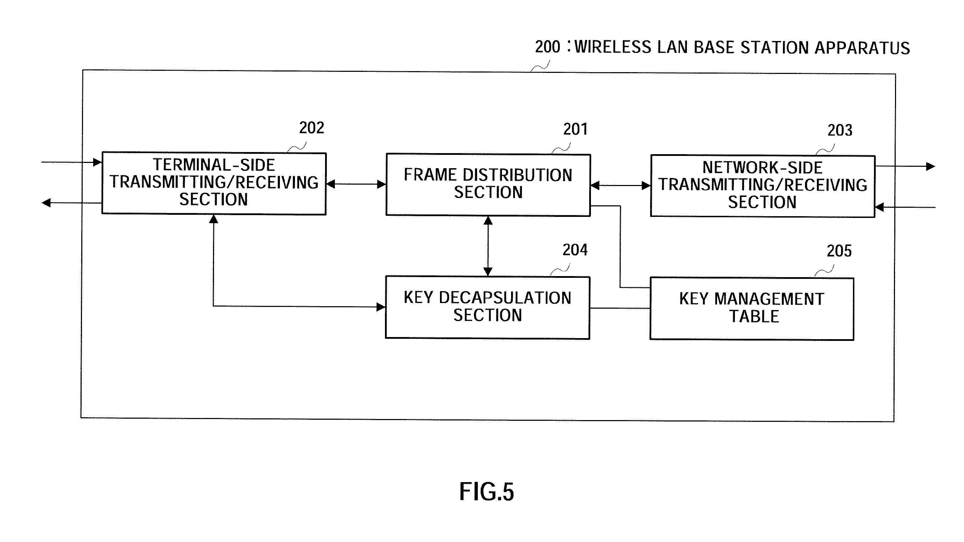

As shown in FIG.5, Wireless LAN base station apparatus 200 is equipped with a frame distribution section 201, a network-side transmitting/receiving section 203, a key decapsulation section 204 serving as a separation section that separates a key configuration request frame from AP control apparatus 100 into first key information and second key information, a terminal-side transmitting/receiving section 202 that transmits separated first key information to communication terminal 300, and a key management table 205.

When frame distribution section 201 receives an authentication request from a communication terminal 300 via terminal-side transmitting/receiving section 202, frame distribution section 201 sends this authentication request to AP control apparatus 100 via network-side transmitting/receiving section 203.

Also, when frame distribution section 201 receives EAP-Success from AP control apparatus 100 via network-side transmitting/receiving section 203 as a successful result of authentication corresponding to an authentication request, frame distribution section 201 sends this to communication terminal 300 via terminal-side transmitting/receiving section 202.

Furthermore, when frame distribution section 201 receives a key configuration request frame fromAP control apparatus 100 via network-side transmitting/receiving section 203, frame distribution section 201 sends this to key decapsulation section 204.

When key decapsulation section 204 receives a key configuration request frame from frame distribution section 201, key decapsulation section 204 separates this key configuration request frame into a key element and an EAPoL element. Then key decapsulation section 204 extracts the terminal MAC address and key information from the key element, and extracts the EAPoL-Key frame from the EAPoL element.

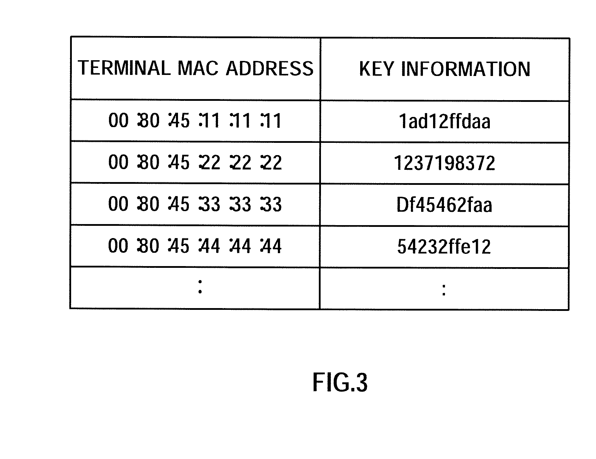

Key decapsulation section 204 then sets the terminal MAC address and key information in key management table 205, and sends the EAPoL-Key frame to communication terminal 300 via terminal-side transmitting/receiving section 202. Key management table 205 has the same kind of configuration as key management table 105 shown in FIG.3.

Thus, key decapsulation section 204 separates an EAPoL-Key frame serving as first key information used by communication terminal 300, and second key information used by Wireless LAN base station apparatus 200, encapsulated by AP control apparatus 100, and sends the EAPoL-Key frame serving as first key information via terminal-side transmitting/receiving section 202.

Then, since the EAPoL-Key frame has previously been adapted to the form of frames exchanged between communication terminal 300 and Wireless LAN base station apparatus 200 when encapsulated by AP control apparatus 100, Wireless LAN base station apparatus 200 can send the EAPoL-Key frame serving as first key information to communication terminal 300 without performing particularly burdensome processing other than separating the key configuration request frame in key decapsulation section 204.

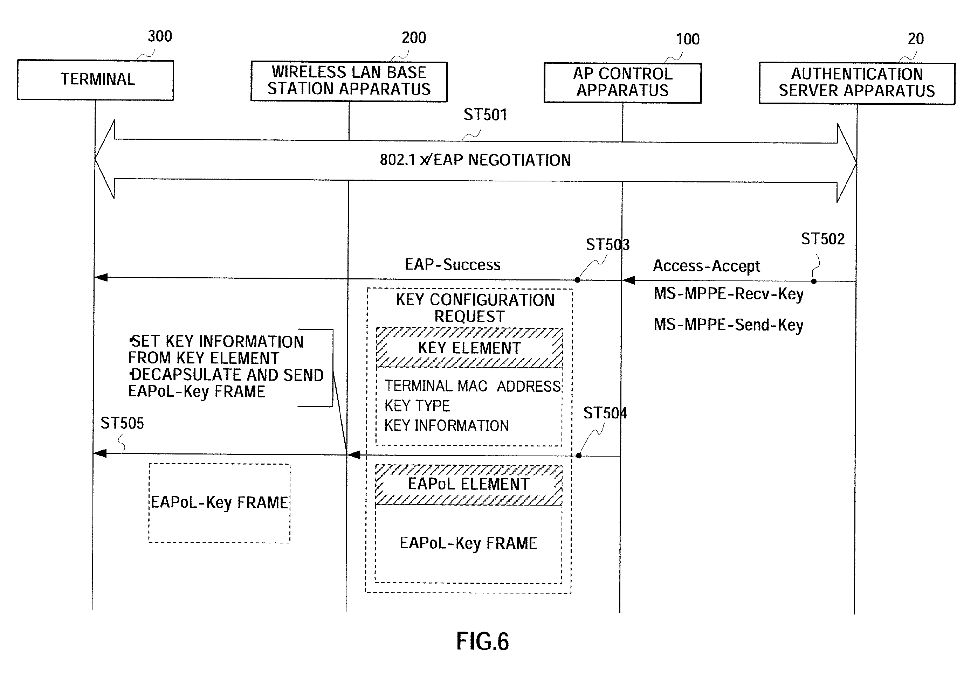

Next, the operation flow of communication system 10 will be described with reference to FIG.6.

In step ST501, communication terminal 300 performs authentication with respect to authentication server apparatus 20 using an IEEE802. 1x/EAP protocol. There are various kinds of EAP - such as EAP-TLS, EAP-TTLS, and EAP-PEAP - according to the type of authentication, but the present invention is not dependent on the type of authentication. Then, when communication terminal 300 authentication terminates normally, a key source called a master key is generated by communication terminal 300 and authentication server apparatus 20.

In step ST502, Access-Accept is transmitted to AP control apparatus 100 from authentication server apparatus 20 as a successful authentication result.

In step ST503, AP control apparatus 100 reports Access-Accept to communication terminal 300 as EAP-Success.

Next, in step ST504, a key configuration request frame generated by AP control apparatus 100 is transmitted to Wireless LAN base station apparatus 200.

In step ST505, the key configuration request frame is separated by Wireless LAN base station apparatus 200, and the extracted EAPoL-Key frame is sent to communication terminal 300. If necessary, Wireless LAN base station apparatus 200 may also transmit a key configuration request frame confirmation response to AP control apparatus 100.

In the description of this embodiment, it is assumed that AP control apparatus 100 and Wireless LAN base station apparatus 200 are connected by means of an Ethernet (registered trademark), and frame exchange is performed in the data link layer, but the present invention is not limited to this, and communication may also be performed in the UDP/IP network layer. In this case, a UDP/IP header is encapsulated instead of Ether header section 410 of the key configuration request frame shown in FIG.4.

Thus, in a communication system according to this embodiment, in AP control apparatus 100, it is possible to link (encapsulate) an EAPoL-Key frame as first key information used by a communication terminal 300 and second key information used by Wireless LAN base station apparatus 200, and generate one frame (key configuration request frame), and to send this frame to Wireless LAN base station apparatus 200. In Wireless LAN base station apparatus 200, the received frame is separated into an EAPoL-Key frame serving as first key information, and second key information used by Wireless LAN base station apparatus 200, and this EAPoL-Key frame is transmitted to communication terminal 300.

Therefore, there is no time difference in the delivery of an EAPoL-Key frame and second key information to Wireless LAN base station apparatus 200, and communication terminal 300 and Wireless LAN base station apparatus 200 can perform communication without the intermediation of a network, so that very little time is taken for an EAPoL-Key frame to be transmitted from Wireless LAN base station apparatus 200 to communication terminal 300, enabling the key configuration times of Wireless LAN base station apparatus 200 and communication terminal 300 to be virtually synchronized, and thereby making it possible to shorten a period of interruption of communication due to non-synchronization of key configuration times arising between Wireless LAN base station apparatus 200 and communication terminal 300.

Furthermore, in a communication system according to this embodiment, inAP control apparatus 100, the signal form of an EAPoL-Key frame serving as first key information is adapted to the frame form (signal form) used between Wireless LAN base station apparatus 200 and communication terminal 300, and an EAPoL-Key frame and second key information used by Wireless LAN base station apparatus 200 are linked (encapsulated), and one frame (key configuration request frame) is generated. In Wireless LAN base station apparatus 200, the received frame is separated into an EAPoL-Key frame serving as first key information, and second key information used by Wireless LAN base station apparatus 200, and this EAPoL-Key frame is transmitted to communication terminal 300.

Therefore, since the EAPoL-Key frame has previously been adapted to the form of frames exchanged between communication terminal 300 and Wireless LAN base station apparatus 200 when encapsulated by AP control apparatus 100, Wireless LAN base station apparatus 200 can send the EAPoL-Key frame serving as first key information to communication terminal 300 without performing particularly burdensome processing other than separating the key configuration request frame. As a result, the processing time required by Wireless LAN base station apparatus 200 can be shortened, enabling the key configuration times of Wireless LAN base station apparatus 200 and communication terminal 300 to be virtually synchronized, and thereby making it possible to shorten a period of interruption of communication due to non-synchronization of key configuration times arising between Wireless LAN base station apparatus 200 and communication terminal 300.

The present application is based on Japanese Patent Application No.2004-201944 filed on July 8, 2004, entire content of which is expressly incorporated herein by reference.

### Industrial Applicability

Acommunicationsystem, key distribution control apparatus, and Wireless LAN base station apparatus of the present invention have the effects of synchronizing the key configuration times of Wireless LAN base station apparatus and communication terminal to a greater degree, and shortening a period of interruption of communication arising between Wireless LAN base station apparatus and communication terminal, and can be used effectively in Wireless LAN communication system, and an access point control apparatus and access points that are components thereof.

## Claims

1. A communication system comprising:
a communication terminal;
Wireless LAN base station apparatus that is accessed by the communication terminal; and
a key distribution control apparatus that distributes encryption key information used in communication between the communication terminal and the Wireless LAN base station apparatus, wherein:
the key distribution control apparatus has a generation section that links first encryption key information used by the communication terminal and second encryption key information used by the Wireless LAN base station apparatus, and generates one key information frame; and
the Wireless LAN base station apparatus has:
a separation section that separates the key information frame into the first encryption key information and the second encryption key information; and
a transmitting section that transmits the first encryption key information to the communication terminal.

2. The communication system according to claim 1, wherein:
the generation section of the key distribution control apparatus generates the key information frame, taking the first encryption key information as a signal form used in a data link layer between the Wireless LAN base station apparatus and the communication terminal; and
the transmitting section of the Wireless LAN base station apparatus transmits the first encryption key information from the separation section directly in accordance with the signal form.

3. A key distribution control apparatus that distributes encryption key information used in communication between a communication terminal 1 and Wireless LAN base station apparatus that is accessed by the communication terminal, comprising:
a generation section that links first encryption key information used by the communication terminal and second encryption key information used by the Wireless LAN base station apparatus, and generates one key information frame; and
a transmitting section that transmits the key information frame to the Wireless LAN base station apparatus.

4. The key distribution control apparatus according to claim 3, wherein the generation section generates the key information frame, taking the first encryption key information as a signal form used in a data link layer between the Wireless LAN base station apparatus and the communication terminal.

5. Wireless LAN base station apparatus that receives a key information frame from a key distribution control apparatus that has:
a generation section that distributes encryption key information used in communication between a communication terminal and Wireless LAN base station apparatus that is accessed by the communication terminal, and that links first encryption key information used by the communication terminal and second encryption key information used by the Wireless LAN base station apparatus, and generates one key information frame; and
a transmitting section that transmits the key information frame to the Wireless LAN base station apparatus;
wherein the Wireless LAN base station apparatus comprises:
a separation section that separates the key information frame into the first encryption key information and the second encryption key information; and
a transmitting section that transmits the first encryption key information to the communication terminal.

6. The Wireless LAN base station apparatus according to claim 5, wherein the transmitting section transmits the first encryption key information from the separation section directly in accordance with the signal form.

## Amended claims

### Amended claims under Art. 19.1 PCT

**1.** (Amended) A communication system comprising:
a communication terminal;
a wireless LAN base station apparatus that is accessed by the communication terminal; and
a key distribution control apparatus that distributes encryption key information used in communication between the communication terminal and the wireless LAN base station apparatus, wherein:
the key distribution control apparatus has a generation section that links first encryption key information used by the communication terminal and second encryption key information used by the wireless LAN base station apparatus, and generates one key information frame;
the wireless LAN base station apparatus has:
a separation section that separates the key information frame into the first encryption key information and the second encryption key information; and
a transmitting section that transmits the first encryption key information to the communication terminal;
the generation section includes the first encryption key information in the form of a wireless LAN frame in the key information frame; and
the transmitting section transmits the first encryption key information directly in that form.

**2.** (Deleted)

**3.** (Amended) A key distribution control apparatus that distributes encryption key information used in communication between a communication terminal and a wireless LAN base station apparatus that is accessed by the communication terminal, comprising:
a generation section that links first encryption key information used by the communication terminal and second encryption key information used by the wireless LAN base station apparatus, and generates one key information frame; and
a transmitting section that transmits the key information frame to the wireless LAN base station apparatus;
wherein the generation section includes the first encryption key information in the form of a wireless LAN frame in the key information frame.

**4.** (Deleted)

**5.** (Amended) A wireless LAN base station apparatus that receives a key information frame from a key distribution control apparatus that has:
a generation section that distributes encryption key information used in communication between a communication terminal and a wireless LAN base station apparatus that is accessed by the communication terminal, and that links first encryption key information used by the communication terminal and second encryption key information used by the wireless LAN base station apparatus, and generates one key information frame; and
a transmitting section that transmits the key information frame to the wireless LAN base station apparatus, wherein:
the first encryption key information is included in the key information frame in the form of a wireless LAN frame;
the wireless LAN base station apparatus comprises:
a separation section that separates the key information frame into the first encryption key information and the second encryption key information; and
a transmitting section that transmits the first encryption key information to the communication terminal, and
the transmitting section transmits the first encryption key information directly in that form.

**6.** (Deleted)
